# EUROPEAN PATENT APPLICATION

(11) **EP 4 538 099 A1**
(43) Date of publication of application: **16.04.2025**
(21) Application number: 24827707.1
(22) Date of filing: 10.01.2024
(51) Int. Cl.: B60L 15/20

(54) **VEHICLE, AND INTEGRATED DRIVING-BRAKING CONTROL APPARATUS AND METHOD FOR VEHICLE**

(30) Priority: 28.08.2023 CN 202311094406
(71) Applicant: Huawei Digital Power Technologies Co., Ltd., Shenzhen, Guangdong 518043 (CN)
(72) Inventor: TANG, Jiayu, Shenzhen, Guangdong 518043 (CN); HUANG, Chongxi, Shenzhen, Guangdong 518043 (CN); NI, Hui, Shenzhen, Guangdong 518043 (CN)
(74) Representative: Gill Jennings & Every LLP
(86) International application number: PCT/CN2024/071666
(87) International publication number: WO 2025/044034

(57) **Abstract**

This application provides a vehicle, and an integrated driving and braking control apparatus and method for a vehicle, to reduce driving and braking costs and difficulty in vehicle arrangement. The vehicle includes a first electric motor brake and a second electric motor brake that are disposed on a first side of the vehicle, a drive system that is disposed on a second side of the vehicle and has an energy regeneration function, and a control apparatus. The control apparatus is configured to control a left wheel of first side wheels of the vehicle to be braked by only the first electric motor brake and a right wheel of the first side wheels of the vehicle to be braked by only the second electric motor brake. The control apparatus is further configured to control a left wheel and a right wheel of second side wheels of the vehicle to be braked by only the drive system. The first side and the second side are a front side and a rear side.

## Description

### CROSS-REFERENCE TO RELATED APPLICATIONS

This application claims priority to Chinese Patent Application No. 202311094406.6, filed with the China National Intellectual Property Administration on August 28, 2023 and entitled "VEHICLE, AND INTEGRATED DRIVING AND BRAKING CONTROL APPARATUS AND METHOD FOR VEHICLE", which is incorporated reference in its entirety.

### TECHNICAL FIELD

This application relates to the field of vehicle driving technologies, and in particular, to a vehicle, and an integrated driving and braking control apparatus and method for a vehicle.

### BACKGROUND

An electric motor brake (electric motor brake, EMB) is an electric brake apparatus that uses an electric motor to drive a mechanical piston to brake a wheel. Compared with a conventional hydraulic brake apparatus, the EMB has advantages of fast response, high precision, and no liquid leakage risk, and therefore is widely used in vehicle brakes. At present, a vehicle usually uses a drive system to implement a drive function, and uses a brake to implement a brake function. The drive system and the brake are completely decoupled. Specifically, the EMB is disposed on each wheel of the vehicle, and a drive motor is disposed on each wheel. Although this design can ensure braking safety of the vehicle, it increases difficulty in arranging driving brakes, and costs of the driving brakes are high.

### SUMMARY

This application provides a vehicle, and an integrated driving and braking control apparatus and method for a vehicle, to reduce driving and braking costs and difficulty in vehicle arrangement.

According to a first aspect, this application provides a vehicle, including a first electric motor brake and a second electric motor brake that are disposed on a first side of the vehicle, a drive system that is disposed on a second side of the vehicle and has a cooperative regenerative brake (cooperative regenerative brake, CRB) function, and a control apparatus. The control apparatus is configured to control a left wheel of first side wheels of the vehicle to be braked by only the first electric motor brake and a right wheel of the first side wheels of the vehicle to be braked by only the second electric motor brake. The control apparatus is further configured to control a left wheel and a right wheel of the second side wheels of the vehicle to be braked by only the drive system.

It should be noted that, in the foregoing description of the first side and the second side in this application, one side is a front side, and the other side is a rear side. Specifically, the first electric motor brake and the second electric motor brake may be disposed on two front side wheels of the vehicle respectively, and are configured to brake the front side wheels of the vehicle. The drive system may be disposed on two rear side wheels or rear side axles of the vehicle, and is configured to drive or brake the rear side wheels of the vehicle. That is, this application may be applied to an electric vehicle or a hybrid vehicle whose rear wheels or rear axles have a driving capability and an energy regeneration function. Alternatively, the first electric motor brake and the second electric motor brake are disposed on two rear side wheels of the vehicle respectively, and are configured to brake the rear side wheels of the vehicle. The drive system may be disposed on two front side wheels or front side axles of the vehicle, and is configured to drive or brake the front side wheels of the vehicle. That is, this application may be applied to an electric vehicle or a hybrid vehicle whose front wheels or front axles have a driving capability and an energy regeneration function.

In this application, the cooperative regenerative brake function of the drive system can better integrate a drive and brake system, to reduce driving and braking costs and difficulty in vehicle arrangement. The first side wheels of the vehicle are provided with brake force by only two electric motor brakes, and the second side wheels of the vehicle are provided with brake force by only the drive system. This can make a supplement to insufficient brake force of the first side wheels, resolve a problem of insufficient brake force, and enable the vehicle to have high braking safety.

In some embodiments of this application, in a failure case, the control apparatus is configured to: in response to a failure of the first electric motor brake, disable the second electric motor brake from braking the right wheel of the first side wheels, and control the drive system to brake the left wheel and the right wheel of the second side wheels; and in response to a failure of the second electric motor brake, disable the first electric motor brake from braking the left wheel of the first side wheels, and control the drive system to brake the left wheel and the right wheel of the second side wheels.

In some embodiments of this application, the drive system may include two drive motors: a first drive motor and a second drive motor, and both the first drive motor and the second drive motor need to have a cooperative regenerative brake function. The first drive motor is configured to drive or brake the left wheel of the second side wheels of the vehicle, and the second drive motor is configured to drive or brake the right wheel of the second side wheels of the vehicle. Specifically, the two drive motors may be two hub motors disposed in the second side wheels of the vehicle, or the two drive motors may be two wheel edge motors disposed on edges of the second side wheels of the vehicle, or the two drive motors may be two common drive motors that are disposed on a chassis of the vehicle and that transfer drive torque by using an axle. In a failure case, the control apparatus is configured to: in response to a failure of the first electric motor brake, disable the second drive motor from braking the right wheel of the second side wheels, and control the first drive motor to brake the left wheel of the second side wheels and the second electric motor brake to brake the right wheel of the first side wheels; or disable the second electric motor brake from braking the right wheel of the first side wheels, and control the first drive motor and the second drive motor to brake the left wheel and the right wheel of the second side wheels respectively; and in response to a failure of the second electric motor brake, disable the first drive motor from braking the left wheel of the second side wheels, and control the second drive motor to brake the right wheel of the second side wheels and the first electric motor brake to brake the left wheel of the first side wheels; or disable the first electric motor brake from braking the left wheel of the first side wheels, and control the first drive motor and the second drive motor to brake the left wheel and the right wheel of the second side wheels respectively.

In some embodiments of this application, when the drive system includes two drive motors, in a failure case, the control apparatus is configured to: in response to a failure of the first drive motor, disable the second drive motor from braking the right wheel of the second side wheels, and control the first electric motor brake and the second electric motor brake to brake the left wheel and the right wheel of the first side wheels respectively; and in response to a failure of the second drive motor, disable the first drive motor from braking the left wheel of the second side wheels, and control the first electric motor brake and the second electric motor brake to brake the left wheel and the right wheel of the first side wheels respectively.

In some embodiments of this application, in a failure case, the control apparatus is configured to: in response to a failure of any one of the first electric motor brake, the second electric motor brake, and the drive system, the control apparatus provides a correction angle signal for a steering system, so that the steering system compensates for a steering angle.

In some embodiments of this application, when brake force requirements are different, the control apparatus is configured to: in response to that a brake force requirement indicated by a brake signal is less than a first threshold, control the drive system to brake the left wheel and the right wheel of the second side wheels.

In some embodiments of this application, when brake force requirements are different, the control apparatus is configured to: in response to that a brake force requirement indicated by a brake signal is greater than a first threshold and less than a second threshold, control the first electric motor brake and the second electric motor brake to brake the left wheel and the right wheel of the first side wheels.

In some embodiments of this application, when brake force requirements are different, the control apparatus is configured to: in response to that a brake force requirement indicated by a brake signal is greater than a second threshold, control the first electric motor brake and the second electric motor brake to brake the left wheel and the right wheel of the first side wheels, and control the drive system to brake the left wheel and the right wheel of the second side wheels.

In some embodiments of this application, when brake force requirements are different, the control apparatus is configured to: in response to that a brake force requirement indicated by a brake signal is greater than a second threshold and less than a third threshold, control the first electric motor brake and the second electric motor brake to brake the left wheel and the right wheel of the first side wheels, and control the drive system to brake the left wheel and the right wheel of the second side wheels by using the energy regeneration function; and in response to that a brake force requirement indicated by a brake signal is greater than the third threshold, control the first electric motor brake and the second electric motor brake to brake the left wheel and the right wheel of the first side wheels, and control the drive system to reversely brake the left wheel and the right wheel of the second side wheels.

According to a second aspect, this application provides an integrated driving and braking control apparatus for a vehicle. The vehicle includes a first electric motor brake, a second electric motor brake, and a drive system with an energy regeneration function, and the drive system includes a first drive motor and a second drive motor. The first electric motor brake is configured to brake a left wheel of first side wheels of the vehicle, and the second electric motor brake is configured to brake a right wheel of the first side wheels of the vehicle. The first drive motor is configured to drive or brake a left wheel of second side wheels of the vehicle, and the second drive motor is configured to drive or brake a right wheel of the second side wheels of the vehicle. A first side and a second side are a front side and a rear side. In a failure case, the control apparatus is configured to:
in response to a failure of the first electric motor brake, disable the second drive motor from braking the right wheel of the second side wheels, and control the first drive motor to brake the left wheel of the second side wheels and the second electric motor brake to brake the right wheel of the first side wheels; or disable the second electric motor brake from braking the right wheel of the first side wheels, and control the first drive motor and the second drive motor to brake the left wheel and the right wheel of the second side wheels respectively; and in response to a failure of the second electric motor brake, disable the first drive motor from braking the left wheel of the second side wheels, and control the second drive motor to brake the right wheel of the second side wheels and the first electric motor brake to brake the left wheel of the first side wheels; or disable the first electric motor brake from braking the left wheel of the first side wheels, and control the first drive motor and the second drive motor to brake the left wheel and the right wheel of the second side wheels respectively.

In some embodiments of this application, in a failure case, the control apparatus is further configured to: in response to a failure of any one of the first electric motor brake, the second electric motor brake, the first drive motor, and the second drive motor, provide a correction angle signal for a steering system, so that the steering system compensates for a steering angle.

In some embodiments of this application, when brake force requirements are different, the control apparatus may be configured to: in response to that a brake force requirement indicated by a brake signal is greater than a second threshold, control the first electric motor brake and the second electric motor brake to brake the left wheel and the right wheel of the first side wheels, and control the drive system to brake the left wheel and the right wheel of the second side wheels.

In some embodiments of this application, when brake force requirements are different, the control apparatus may be configured to: in response to that a brake force requirement indicated by a brake signal is greater than the second threshold and less than a third threshold, control the first electric motor brake and the second electric motor brake to brake the left wheel and the right wheel of the first side wheels, and control the drive system to brake the left wheel and the right wheel of the second side wheels by using the energy regeneration function; and in response to that a brake force requirement indicated by a brake signal is greater than the third threshold, control the first electric motor brake and the second electric motor brake to brake the left wheel and the right wheel of the first side wheels, and control the drive system to reversely brake the left wheel and the right wheel of the second side wheels.

According to a third aspect, this application further provides an integrated driving and braking control method for a vehicle. The vehicle includes a first electric motor brake, a second electric motor brake, and a drive system with an energy regeneration function, and the drive system includes a first drive motor and a second drive motor. In a failure case, the control method includes: in response to a failure of the first electric motor brake, disabling the second drive motor from braking the right wheel of the second side wheels, and controlling the first drive motor to brake the left wheel of the second side wheels and the second electric motor brake to brake the right wheel of the first side wheels; or disabling the second electric motor brake from braking the right wheel of the first side wheels, and controlling the first drive motor and the second drive motor to brake the left wheel and the right wheel of the second side wheels respectively; and in response to a failure of the second electric motor brake, disabling the first drive motor from braking the left wheel of the second side wheels, and controlling the second drive motor to brake the right wheel of the second side wheels and the first electric motor brake to brake the left wheel of the first side wheels; or disabling the first electric motor brake from braking the left wheel of the first side wheels, and controlling the first drive motor and the second drive motor to brake the left wheel and the right wheel of the second side wheels respectively, where a first side and a second side are a front side and a rear side.

In some embodiments of this application, in a failure case, the control method includes: in response to a failure of any one of the first electric motor brake, the second electric motor brake, the first drive motor, and the second drive motor, providing a correction angle signal for a steering system, so that the steering system compensates for a steering angle.

For a technical effect that can be achieved by any possible design in any one of the second aspect and the third aspect, refer to a technical effect that can be achieved by any possible design in the first aspect. Details are not described herein again.

### BRIEF DESCRIPTION OF DRAWINGS

FIG. 1 is a diagram of a structure of a vehicle according to an embodiment of this application;
FIG. 2 is a diagram of another structure of a vehicle according to an embodiment of this application;
FIG. 3 is a diagram of another structure of a vehicle according to an embodiment of this application;
FIG. 4 is a diagram of another structure of a vehicle according to an embodiment of this application;
FIG. 5a is a diagram of providing brake force of first side wheels by a vehicle according to an embodiment of this application;
FIG. 5b is a diagram of providing brake force of second side wheels by a vehicle according to an embodiment of this application;
FIG. 6 is a diagram of a response policy of a vehicle in a brake failure scenario according to an embodiment of this application;
FIG. 7a is a diagram of another response policy of a vehicle in a brake failure scenario according to an embodiment of this application;
FIG. 7b is a diagram of another response policy of a vehicle in a brake failure scenario according to an embodiment of this application;
FIG. 7c is a diagram of another response policy of a vehicle in a brake failure scenario according to an embodiment of this application;
FIG. 7d is a diagram of another response policy of a vehicle in a brake failure scenario according to an embodiment of this application;
FIG. 8a is a diagram of another response policy of a vehicle in a brake failure scenario according to an embodiment of this application;
FIG. 8b is a diagram of another response policy of a vehicle in a brake failure scenario according to an embodiment of this application;
FIG. 9a is a diagram of another response policy of a vehicle in a brake failure scenario according to an embodiment of this application;
FIG. 9b is a diagram of another response policy of a vehicle in a brake failure scenario according to an embodiment of this application;
FIG. 10a is a diagram of another response policy of a vehicle in a brake failure scenario according to an embodiment of this application;
FIG. 10b is a diagram of another response policy of a vehicle in a brake failure scenario according to an embodiment of this application;
FIG. 11a is a diagram of another response policy of a vehicle in a brake failure scenario according to an embodiment of this application;
FIG. 11b is a diagram of another response policy of a vehicle in a brake failure scenario according to an embodiment of this application; and
FIG. 12 is a diagram of another response policy of a vehicle in a brake failure scenario according to an embodiment of this application.

### DESCRIPTION OF EMBODIMENTS

To make objectives, technical solutions, and advantages of this application clearer, the following further describes this application in detail with reference to the accompanying drawings.

Terms used in the following embodiments are merely intended to describe particular embodiments, but are not intended to limit this application. As used in the specification and the appended claims of this application, the singular expressions "a/an", "one", "said", "the above", "the" and "this" are intended to also include such expressions as "one or more", unless otherwise clearly indicated in the context.

Reference to "one embodiment" or "some embodiments" described in this specification means that a specific characteristic, structure, or feature described in combination with this embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and variants of the terms all mean "include but are not limited to", unless otherwise specifically emphasized.

The following clearly and completely describes the technical solutions in embodiments of this application with reference to the accompanying drawings in embodiments of this application.

A drive system and a brake system of a vehicle, as core components, directly determine performance of the vehicle.

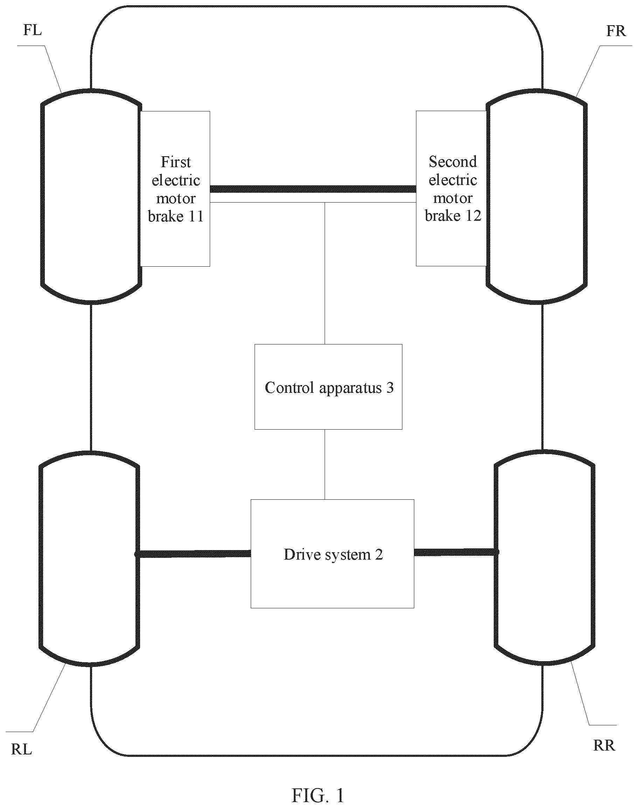

FIG. 1 is an example of a diagram of a structure of a vehicle according to an embodiment of this application.

Refer to FIG. 1. The vehicle provided in this embodiment of this application may specifically include a first electric motor brake 11 (electric motor brake, EMB) configured to brake a left wheel of first side wheels of the vehicle, a second electric motor brake 12 configured to brake a right wheel of the first side wheels of the vehicle, a drive system 2 configured to drive second side wheels of the vehicle, and a control apparatus 3 configured to control the first electric motor brake 11, the second electric motor brake 12, and the drive system 2. The first electric motor brake 11 and the second electric motor brake 12 are disposed on a first side of the vehicle, and the first electric motor brake 11 and the second electric motor controller 12 are electric brake apparatuses that use an electric motor to drive a mechanical piston to brake a corresponding wheel. The drive system 2 is disposed on a second side of the vehicle, and the drive system 2 has a cooperative regenerative brake (cooperative regenerative brake, CRB) function. The control apparatus 3 may control the left wheel of the first side wheels of the vehicle to be braked by only the first electric motor brake 11, and control the right wheel of the first side wheels of the vehicle to be braked by only the second electric motor brake 12. The control apparatus 3 may further control a left wheel and a right wheel of the second side wheels of the vehicle to be braked by only the drive system 2.

In this embodiment of this application, the vehicle is applied to a two-axle vehicle. The two-axle vehicle includes two front side wheels and two rear side wheels. The two front side wheels are a front left (front left, FL) wheel and a front right (front right, FR) wheel, and the two rear side wheels are a rear left (rear left, RL) wheel and a rear right (rear right, RR) wheel. It should be noted that, in the foregoing description of the first side and the second side in this application, one side is a front side, and the other side is a rear side. Specifically, refer to FIG. 1. The first electric motor brake 11 and the second electric motor brake 12 may be disposed on two front side wheels of the vehicle respectively, and are configured to brake the front side wheels of the vehicle. The drive system 2 may be disposed on two rear side wheels or rear side axles of the vehicle, and is configured to drive or brake the rear side wheels of the vehicle. That is, this application may be applied to an electric vehicle or a hybrid vehicle whose rear wheels or rear axles have a driving capability and an energy regeneration function. Alternatively, the first electric motor brake 11 and the second electric motor brake 12 are disposed on two rear side wheels of the vehicle respectively, and are configured to brake the rear side wheels of the vehicle. The drive system 2 may be disposed on two front side wheels or front side axles of the vehicle, and is configured to drive or brake the front side wheels of the vehicle. That is, this application may be applied to an electric vehicle or a hybrid vehicle whose front wheels or front axles have a driving capability and an energy regeneration function.

In this application, the cooperative regenerative brake function of the drive system 2 can better integrate a drive and brake system, to reduce driving and braking costs and difficulty in vehicle arrangement. The first side wheels of the vehicle are provided with brake force by only two electric motor brakes, and the second side wheels of the vehicle are provided with brake force by only the drive system. This can make a supplement to insufficient brake force of the first side wheels, resolve a problem of insufficient brake force, and enable the vehicle to have high braking safety.

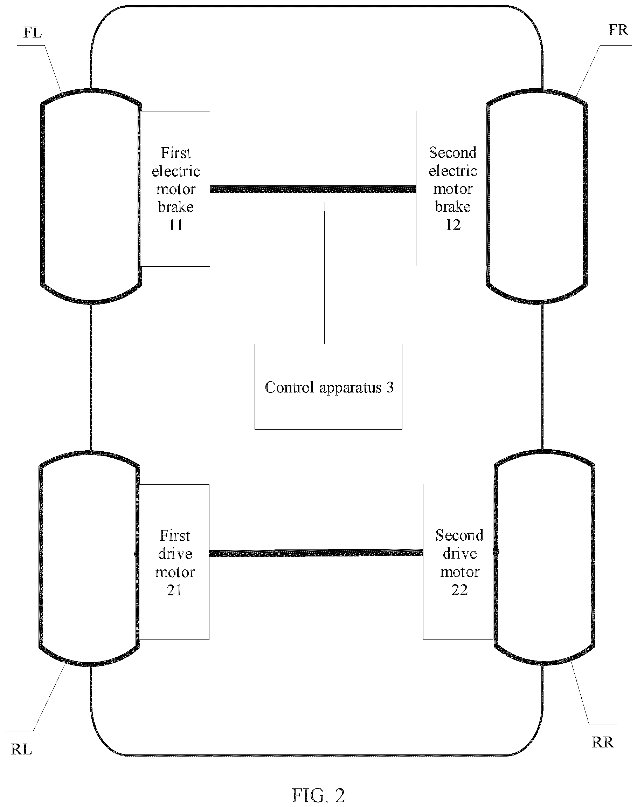

FIG. 2 is an example of a diagram of another structure of a vehicle according to an embodiment of this application.

Refer to FIG. 2. In some embodiments of this application, the drive system 2 may include two drive motors: a first drive motor 21 and a second drive motor 22, and both the first drive motor 21 and the second drive motor 22 need to have the cooperative regenerative brake function. The first drive motor 21 is configured to drive or brake the left wheel of the second side wheels of the vehicle, and the second drive motor 22 is configured to drive or brake the right wheel of the second side wheels of the vehicle. Specifically, the two drive motors may be two hub motors disposed in the second side wheels of the vehicle, or the two drive motors may be two wheel edge motors disposed on edges of the second side wheels of the vehicle, or the two drive motors may be two common drive motors that are disposed on a chassis of the vehicle and that transfer drive torque by using an axle.

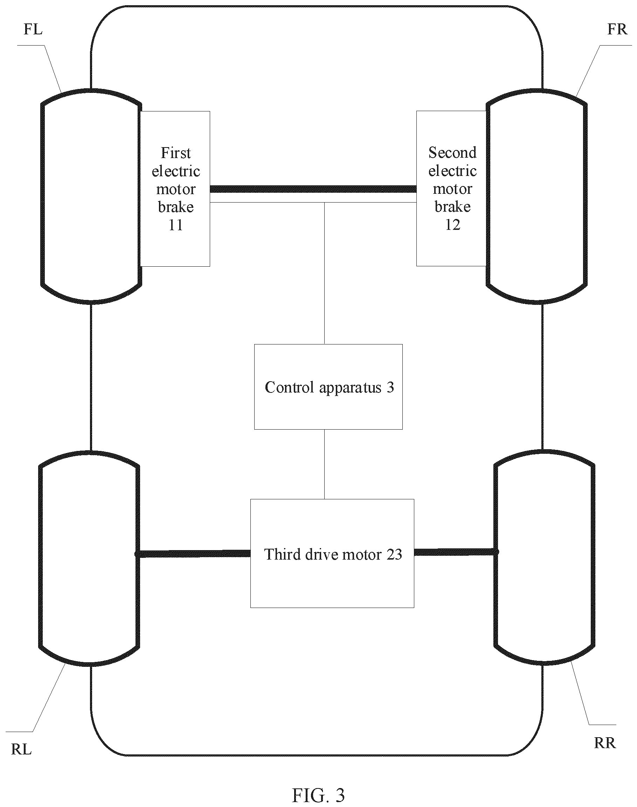

FIG. 3 is an example of a diagram of another structure of a vehicle according to an embodiment of this application.

Refer to FIG. 3. In some other embodiments of this application, the drive system 2 may alternatively be one drive motor, that is, a third drive motor 23, and the third drive motor 23 has the cooperative regenerative brake function. The third drive motor 23 is configured to drive or brake both the left wheel and the right wheel of the second side wheels of the vehicle. Specifically, the third drive motor 23 may be a common drive motor that is disposed on a chassis and that transfers drive torque by using an axle and a differential.

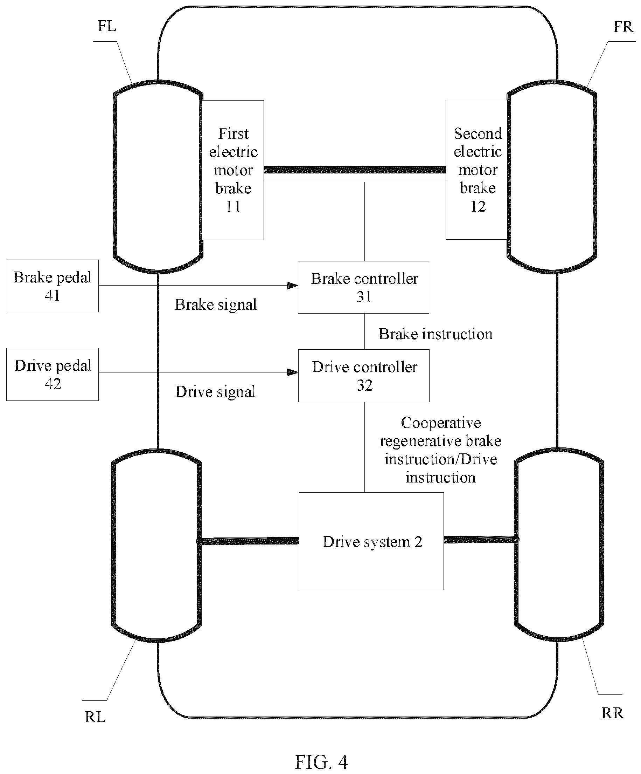

FIG. 4 is an example of a diagram of another structure of a vehicle according to an embodiment of this application.

Refer to FIG. 4. In some embodiments of this application, the control apparatus 3 may include a brake controller 31 and a drive controller 32. The brake controller 31 may receive a brake signal output by a brake pedal 41. The brake pedal 41 is usually disposed in a vehicle body, and in response to a pressing operation of a driver, the brake pedal 41 may output the brake signal. The brake signal includes travel information or foot pressure. In some implementations, the brake pedal 41 may include a pedal body and a pedal travel sensor. The pedal travel sensor is configured to detect and output travel information of the brake pedal 41. In addition, according to different pressing operations of the driver, for example, light pressing, less light pressing, less heavy pressing, and heavy pressing, the pedal travel sensor detects different travel information of the brake pedal 41, and may compare the travel information with different preset thresholds to determine a corresponding pressing operation, so as to generate a corresponding brake signal. After generating the brake signal, the brake pedal 41 transmits the brake signal to the brake controller 31. The brake controller 31 calculates brake force that needs to be allocated to and that needs to be generated by the drive system 2 and brake force that needs to be generated by the first electric motor brake 11 and the second electric motor brake 12, and generates a corresponding brake instruction. The brake controller 31 may directly control the first electric motor brake 11 and the second electric motor brake 12 to generate corresponding drive currents to meet the required brake force. The brake controller 31 may send the corresponding brake instruction to the drive controller 32. The drive controller 32 generates a cooperative regenerative brake instruction based on the corresponding brake instruction, and controls the drive system 2 to generate a power generation current based on the cooperative regenerative brake instruction to meet the required brake force. The drive controller 32 may further receive a drive signal output by a drive pedal 42. The drive pedal 42 is also usually disposed in a vehicle body, and in response to a pressing operation of the driver, the drive pedal 42 may output a drive signal. After generating the drive signal, the drive pedal 42 transmits the drive signal to the drive controller 32. The drive controller 32 calculates a drive current required by the drive system 2, and generates a corresponding drive instruction. The drive system 2 may generate corresponding drive torque based on the drive instruction to generate drive force.

The brake signal generated by the brake pedal 41 is generated in a manual driving mode. In an automatic driving mode, the brake controller 31 may further receive a brake signal sent by an upper-layer controller, and the brake controller 31 may perform a corresponding operation based on the brake signal. Similarly, the drive signal generated by the drive pedal 42 is generated in the manual driving mode. In the automatic driving mode, the drive controller 32 may further receive a drive signal sent by an upper-layer controller, and the drive controller 32 may perform a corresponding operation based on the drive signal.

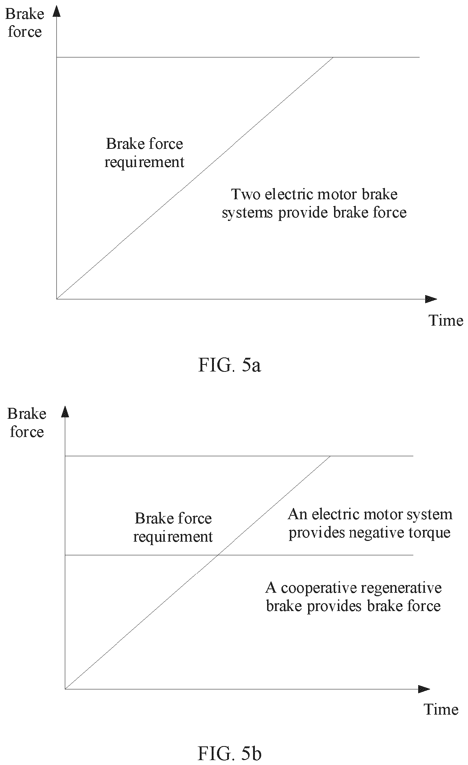

FIG. 5a is an example of a diagram of providing brake force of first side wheels by a vehicle according to an embodiment of this application. FIG. 5b is an example of a diagram of providing brake force of second side wheels by a vehicle according to an embodiment of this application.

The vehicle provided in this embodiment of this application may perform a drive operation and a brake operation based on a driving intention. Specifically, in a normal driving state, drive force may be provided by the drive system 2. In a brake scenario, refer to FIG. 5a. The first side wheels may be provided with brake force by the two electric motor brakes. Refer to FIG. 5b. The second side wheels may be preferentially provided with brake force by the cooperative regenerative brake function of the drive system 2, and insufficient brake force is supplemented by reverse (negative) torque of the drive system 2. In addition, in this application, corresponding brake response manners may be set based on different brake scenarios, to ensure that sufficient brake energy can be regenerated in a conventional brake scenario, and sufficient brake force can be provided in an emergency brake scenario.

In some embodiments of this application, in response to that a brake force requirement indicated by a brake signal is less than a first threshold, the control apparatus 3 may control the drive system 2 to brake the left wheel and the right wheel of the second side wheels, to meet a brake requirement. Specifically, after the driver lightly presses the brake pedal 41, the pedal travel sensor of the brake pedal 41 detects travel information of the brake pedal 41, and the brake pedal 41 may generate a brake signal indicating that a brake force requirement is less than the first threshold, and transmit the brake signal to the brake controller 31. Alternatively, in the automatic driving mode, the brake controller 31 may receive, from an upper-layer controller, a brake signal that indicates that a brake force requirement is less than the first threshold. If the brake controller 31 determines, based on the brake signal, that the cooperative regenerative brake function of the drive system 2 can meet the brake requirement, the brake controller 31 may generate a first brake instruction based on the brake signal, and send the first brake instruction to the drive controller 32. The drive controller 32 may control, based on the first brake instruction, the drive system 2 to provide brake force by using the cooperative regenerative brake function.

In some embodiments of this application, in response to that a brake force requirement indicated by a brake signal is greater than the first threshold and less than a second threshold, the control apparatus 3 may control the first electric motor brake 11 and the second electric motor brake 12 to brake the left wheel and the right wheel of the first side wheels, to meet a brake requirement. Specifically, after the driver less lightly presses the brake pedal 41, the pedal travel sensor of the brake pedal 41 detects travel information of the brake pedal 41, and the brake pedal 41 may generate a brake signal indicating that a brake force requirement is greater than the first threshold and less than the second threshold, and transmit the brake signal to the brake controller 31. Alternatively, in the automatic driving mode, the brake controller 31 may receive, from an upper-layer controller, a brake signal that indicates that a brake force requirement is greater than the first threshold and less than the second threshold. The brake controller 31 determines, based on the brake signal, that the first electric motor brake 11 and the second electric motor brake 12 can meet the brake requirement, the brake controller 31 may directly control, based on the brake signal, the first electric motor brake 11 and the second electric motor brake 12 to increase a drive current of an electric motor to increase brake force at a wheel end.

In some embodiments of this application, in response to that a brake force requirement indicated by a brake signal is greater than the second threshold, the control apparatus 3 may control the drive system 2 to brake the left wheel and the right wheel of the second side wheels, and also control the first electric motor brake 11 and the second electric motor brake 12 to brake the left wheel and the right wheel of the first side wheels, to meet a brake requirement.

Specifically, in some embodiments of this application, in response to that a brake force requirement indicated by a brake signal is greater than the second threshold and less than a third threshold, the control apparatus 3 may control the drive system 2 to brake the left wheel and the right wheel of the second side wheels by using the cooperative regenerative brake function, and also control the first electric motor brake 11 and the second electric motor brake 12 to brake the left wheel and the right wheel of the first side wheels, to meet a brake requirement. For example, after the driver less heavily presses the brake pedal 41, the pedal travel sensor of the brake pedal 41 detects travel information of the brake pedal 41, and the brake pedal 41 may generate a brake signal indicating that a brake force requirement is greater than the second threshold and less than the third threshold, and transmit the brake signal to the brake controller 31. Alternatively, in the automatic driving mode, the brake controller 31 may receive, from an upper-layer controller, a brake signal that indicates that a brake force requirement is greater than the second threshold and less than the third threshold. After the brake controller 31 calculates, based on the brake signal, brake force that needs to be allocated to and that needs to be generated by the cooperative regenerative brake function of the drive system 2 and brake force that needs to be generated by the first electric motor brake 11 and the second electric motor brake 12, the brake controller 31 may directly control the first electric motor brake 11 and the second electric motor brake 12 to increase a drive current of the electric motor to increase brake force at the wheel end. In addition, the brake controller 31 needs to generate a second brake instruction, and send the second brake instruction to the drive controller 32. The drive controller 32 controls, based on the second brake instruction, the drive system 2 to generate a power generation current by using the cooperative regenerative brake function, so as to provide the corresponding brake force at the same time.

Specifically, in some embodiments of this application, in response to that a brake force requirement indicated by a brake signal is greater than the third threshold, the control apparatus 3 may control the drive system 2 to reversely brake the left wheel and the right wheel of the second side wheels, and control the first electric motor brake 11 and the second electric motor brake 12 to brake the left wheel and the right wheel of the first side wheels, to meet a brake requirement. For example, after the driver heavily presses the brake pedal 41, the pedal travel sensor of the brake pedal 41 detects travel information of the brake pedal 41, and the brake pedal 41 may generate a brake signal indicating that a brake force requirement is greater than the third threshold, and transmit the brake signal to the brake controller 31. Alternatively, in the automatic driving mode, the brake controller 31 may receive, from an upper-layer controller, a brake signal that indicates that a brake force requirement is greater than the third threshold. After the brake controller 31 calculates, based on the brake signal, brake force that needs to be allocated to and that needs to be generated by the drive system 2 and brake force that needs to be generated by the first electric motor brake 11 and the second electric motor brake 12, the brake controller 31 may directly control the first electric motor brake 11 and the second electric motor brake 12 to increase a drive current of the electric motor to increase brake force at the wheel end. In addition, the brake controller 31 needs to generate a third brake instruction, and send the third brake instruction to the drive controller 32. The drive controller 32 controls, based on the third brake instruction, the drive system 2 to reverse torque to generate a power generation current, so as to provide larger reverse brake force.

It should be noted that specific values of the first threshold, the second threshold, and the third threshold mentioned above may be set according to an actual requirement. Generally, the first threshold is less than the second threshold, and the second threshold is less than the third threshold.

In this application, a corresponding response policy may be further set based on different brake failure scenarios, to ensure that the vehicle brakes smoothly.

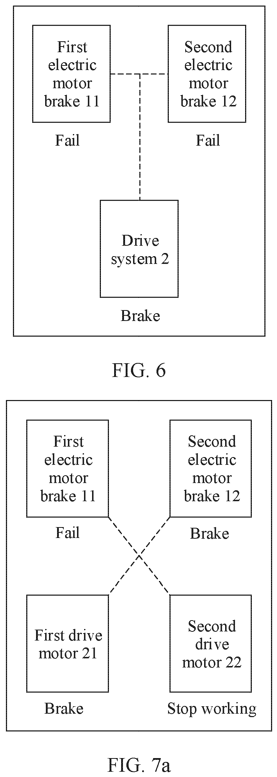

FIG. 6 is an example of a diagram of a response policy of the vehicle in a brake failure scenario according to an embodiment of this application.

Refer to FIG. 6. In some embodiments of this application, when both the first electric motor brake 11 and the second electric motor brake 12 fail, the drive system 2 may be controlled to provide brake force. That is, when braking of both the left wheel and the right wheel of the first side wheels fails, the left wheel and the right wheel of the second side wheels may be controlled to perform same deceleration processing. In addition, when the brake force generated by the drive system 2 is insufficient to meet a deceleration requirement corresponding to the brake signal generated by the brake pedal 41, the vehicle may further decelerate by using redundant braking or an electrical park brake system (electrical park brake, EPB).

When a single-side electric motor brake fails, different response policies may be used for different architectures of the drive system 2.

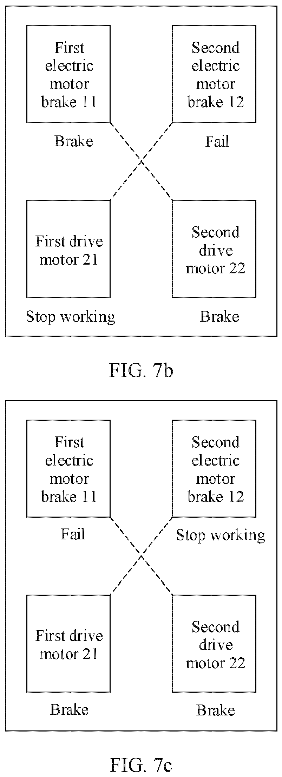

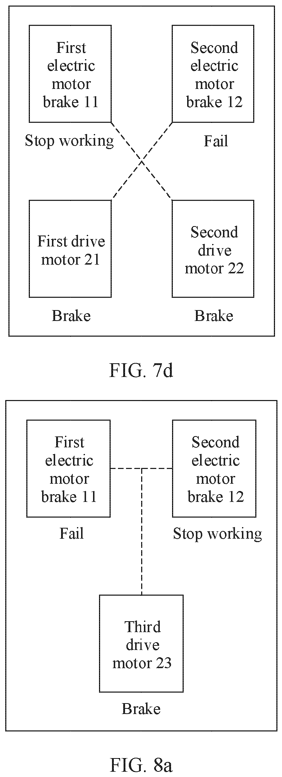

FIG. 7a is a diagram of another response policy of the vehicle in a brake failure scenario according to an embodiment of this application. FIG. 7b is a diagram of another response policy of the vehicle in a brake failure scenario according to an embodiment of this application. FIG. 7c is a diagram of another response policy of the vehicle in a brake failure scenario according to an embodiment of this application. FIG. 7d is a diagram of another response policy of the vehicle in a brake failure scenario according to an embodiment of this application.

In some embodiments of this application, when the drive system 2 includes two drive motors: the first drive motor 21 and the second drive motor 22, when a single-side electric motor brake fails, a diagonal drive motor may be controlled to stop working to enable the vehicle to brake smoothly. Refer to FIG. 7a. When the first electric motor brake 11 fails, the control apparatus 3 may disable the second drive motor 22 from braking the right wheel of the second side wheels, and use the second electric motor brake 12 and the first drive motor 21 to provide same brake force. That is, when braking of the left wheel of the first side wheels fails, braking of the right wheel of the second side wheels may be controlled to stop, the first drive motor 21 is controlled to brake the left wheel of the second side wheels, and the second electric motor brake 12 is controlled to brake the right wheel of the first side wheels, to decelerate the right wheel of the first side wheels and the left wheel of the second side wheels. Refer to FIG. 7b. When the second electric motor brake 12 fails, the control apparatus 3 may disable the first drive motor 21 from braking the left wheel of the second side wheels, and use the first electric motor brake 11 and the second drive motor 22 to provide brake force. That is, when braking of the right wheel of the first side wheels fails, braking of the left wheel of the second side wheels may be controlled to stop, the first electric motor brake 11 is controlled to brake the left wheel of the first side wheels, and the second drive motor 22 is controlled to brake the right wheel of the second side wheels, to decelerate the left wheel of the first side wheels and the right wheel of the second side wheels.

In some other embodiments of this application, when the drive system 2 includes two drive motors: the first drive motor 21 and the second drive motor 22, when a single-side electric motor brake fails, to enable the vehicle to brake smoothly, motor control apparatuses on a same side may be controlled to stop working, and the first drive motor 21 and the second drive motor 22 are used to provide same brake force. Refer to FIG. 7c. When the first electric motor brake 11 fails, the control apparatus 3 may disable the second electric motor brake 12 from braking the right wheel of the first side wheels, and use the first drive motor 21 and the second drive motor 22 to separately provide same brake force. That is, when braking of the left wheel of the first side wheels fails, braking of the right wheel of the first side wheels may be controlled to stop, the first drive motor 21 is controlled to brake the left wheel of the second side wheels, and the second drive motor 22 is controlled to brake the right wheel of the second side wheels, to decelerate the left wheel and the right wheel of the second side wheels. Refer to FIG. 7d. When the second electric motor brake 12 fails, the control apparatus 3 may disable the first electric motor brake 11 from braking the left wheel of the first side wheels, and use the first drive motor 21 and the second drive motor 22 to provide same brake force by using the cooperative regenerative brake function separately. That is, when braking of the right wheel of the first side wheels fails, braking of the left wheel of the first side wheels may be controlled to stop, the first drive motor 21 is controlled to brake the left wheel of the second side wheels, and the second drive motor 22 is controlled to brake the right wheel of the second side wheels, to decelerate the left wheel and the right wheel of the second side wheels.

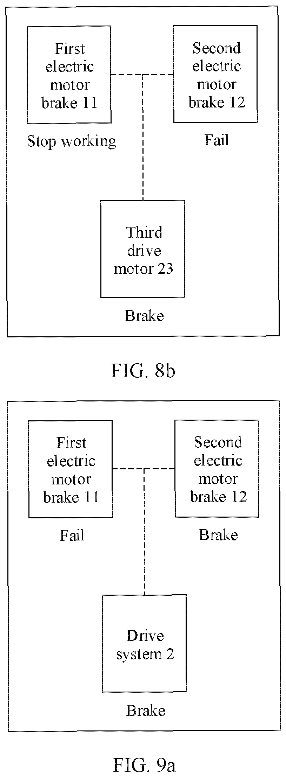

FIG. 8a is an example of a diagram of another response policy of the vehicle in a brake failure scenario according to an embodiment of this application. FIG. 8b is an example of a diagram of another response policy of the vehicle in a brake failure scenario according to an embodiment of this application.

In some embodiments of this application, when the drive system 2 is one drive motor, that is, the third drive motor 23, when a single-side electric motor brake fails, to enable the vehicle to brake smoothly, a motor control apparatus on the same side may be controlled to stop working, and the cooperative regenerative brake function of the third drive motor 23 is used to provide same brake force for the left wheel and the right wheel of the second side wheels. Refer to FIG. 8a. When the first electric motor brake 11 fails, the control apparatus 3 may disable the second electric motor brake 12 from braking the right wheel of the first side wheels, and use the third drive motor 23 to provide brake force. That is, when braking of the left wheel of the first side wheels fails, braking of the right wheel of the first side wheels may be controlled to stop, and the drive system 2 is controlled to brake the left wheel and the right wheel of the second side wheels, to perform same deceleration processing on the left wheel and the right wheel of the second side wheels. Refer to FIG. 8b. When the second electric motor brake 12 fails, the control apparatus 3 may disable the first electric motor brake 11 from braking the left wheel of the first side wheels, and use the third drive motor 23 to provide brake force. That is, when braking of the right wheel of the first side wheels fails, braking of the left wheel of the first side wheels may be controlled to stop, and the drive system 2 is controlled to brake the left wheel and the right wheel of the second side wheels, to perform same deceleration processing on the left wheel and the right wheel of the second side wheels.

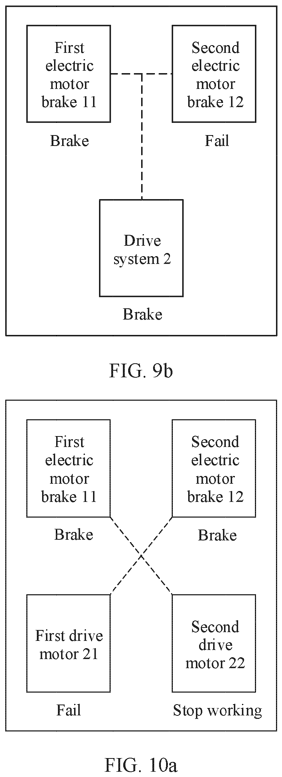

FIG. 9a is an example of a diagram of another response policy of the vehicle in a brake failure scenario according to an embodiment of this application. FIG. 9b is an example of a diagram of another response policy of the vehicle in a brake failure scenario according to an embodiment of this application.

In some other embodiments of this application, when a single-side electric motor brake fails, a steering system may also increase a steering angle, so that the vehicle brakes smoothly. Refer to FIG. 9a. When the first electric motor brake 11 fails, the control apparatus 3 uses the second electric motor brake 12 and the drive system 2 to provide brake force, and the control apparatus 3 provides a correction angle signal for the steering system, so that the steering system controls a steering wheel to increase the steering angle to compensate for torque generated by the failure of the first electric motor brake 11. That is, when braking of the left wheel of the first side wheels fails, the right wheel of the first side wheels, and the left wheel and the right wheel of the second side wheels may be decelerated, and the steering angle of the steering wheel is increased. Refer to FIG. 9b. When the second electric motor brake 12 fails, the control apparatus 3 uses the first electric motor brake 11 and the drive system 2 to provide brake force, and the control apparatus 3 provides a correction angle signal for the steering system, so that the steering system controls a steering wheel to increase the steering angle to compensate for torque generated by the failure of the second electric motor brake 12. That is, when braking of the right wheel of the first side wheels fails, the left wheel of the first side wheels, and the left wheel and the right wheel of the second side wheels may be decelerated, and the steering angle of the steering wheel is increased.

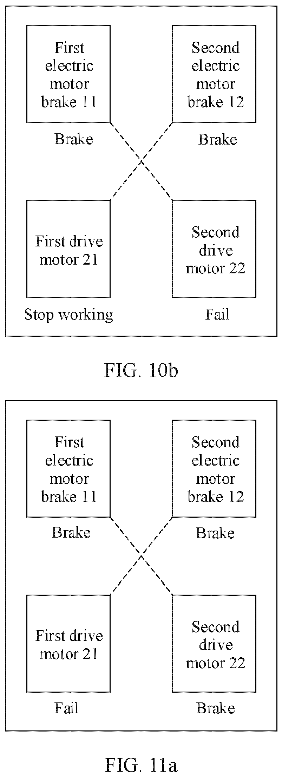

FIG. 10a is an example of a diagram of another response policy of the vehicle in a brake failure scenario according to an embodiment of this application. FIG. 10b is an example of a diagram of another response policy of the vehicle in a brake failure scenario according to an embodiment of this application.

In some embodiments of this application, when the drive system 2 includes two drive motors: the first drive motor 21 and the second drive motor 22, when a single-side drive motor fails, the other drive motor may be controlled to stop working to enable the vehicle to brake smoothly. Refer to FIG. 10a. When the first drive motor 21 fails, the control apparatus 3 may disable the second drive motor 22 from braking the right wheel of the second side wheels, and use the first electric motor brake 11 and the second electric motor brake 12 to provide same brake force. That is, when braking of the left wheel of the second side wheels fails, braking of the right wheel of the second side wheels may be controlled to stop, and the first electric motor brake 11 and the second electric motor brake 12 are controlled to brake the left wheel and the right wheel of the first side wheels respectively, to decelerate the right wheel and the left wheel of the first side wheels. Refer to FIG. 10b. When the second drive motor 22 fails, the control apparatus 3 may disable the first drive motor 21 from braking the left wheel of the second side wheels, and use the first electric motor brake 11 and the second electric motor brake 12 to provide same brake force. That is, when braking of the right wheel of the second side wheels fails, braking of the left wheel of the second side wheels may be controlled to stop, and the first electric motor brake 11 and the second electric motor brake 12 are controlled to brake the left wheel and the right wheel of the first side wheels respectively, to decelerate the right wheel and the left wheel of the first side wheels.

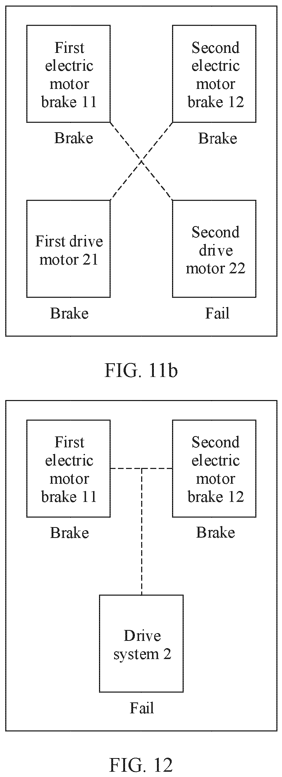

FIG. 11a is an example of a diagram of another response policy of the vehicle in a brake failure scenario according to an embodiment of this application. FIG. 11b is an example of a diagram of another response policy of the vehicle in a brake failure scenario according to an embodiment of this application.

In some embodiments of this application, when the drive system 2 includes two drive motors: the first drive motor 21 and the second drive motor 22, when a drive motor on one side fails, the steering system may also increase the steering angle, so that the vehicle brakes smoothly. Refer to FIG. 11a. When the first drive motor 21 fails, the control apparatus 3 uses the first electric motor brake 11, the second electric motor brake 12, and the second drive motor 22 to provide brake force, and the control apparatus 3 provides a correction angle signal for the steering system, so that the steering system controls a steering wheel to increase the steering angle to compensate for torque generated by the failure of the first drive motor 21. That is, when braking of the left wheel of the second side wheels fails, the right wheel of the second side wheels, and the left wheel and the right wheel of the first side wheels may be decelerated, and the steering angle of the steering wheel is increased. Refer to FIG. 11b. When the second drive motor 22 fails, the control apparatus 3 uses the first electric motor brake 11, the second electric motor brake 12, and the first drive motor 21 to provide brake force, and the control apparatus 3 provides a correction angle signal for the steering system, so that the steering system controls a steering wheel to increase the steering angle to compensate for torque generated by the failure of the second drive motor 22. That is, when braking of the right wheel of the second side wheels fails, the left wheel of the second side wheels, and the left wheel and the right wheel of the first side wheels may be decelerated, and the steering angle of the steering wheel is increased.

FIG. 12 is an example of a diagram of another response policy of the vehicle in a brake failure scenario according to an embodiment of this application.

Refer to FIG. 12. In some embodiments of this application, when the drive system 2 fails, that is, when both the two drive motors: the first drive motor 21 and the second drive motor 22 included in the drive system 2 fail, or when the drive system 2 is one drive motor, that is, the third drive motor 23, and the third drive motor 23 fails, the first electric motor brake 11 and the second electric motor brake 12 may be controlled to provide same brake force, to brake the vehicle smoothly. That is, when braking of both the left wheel and the right wheel of the second side wheels fails, the first electric motor brake 11 and the second electric motor brake 12 are controlled to brake the left wheel and the right wheel of the first side wheels respectively, to perform same deceleration processing on the right wheel and the left wheel of the first side wheels.

The vehicle proposed in embodiments of this application may be applied to an electric vehicle or a hybrid vehicle that has a cooperative regenerative brake function.

Based on a same inventive concept, this application further provides an integrated driving and braking control apparatus for a vehicle. The driving-controlled vehicle includes a first electric motor brake, a second electric motor brake, and a drive system with an energy regeneration function, and the drive system includes a first drive motor and a second drive motor. The first electric motor brake is configured to brake a left wheel of first side wheels of the vehicle, and the second electric motor brake is configured to brake a right wheel of the first side wheels of the vehicle. The first drive motor is configured to drive or brake a left wheel of second side wheels of the vehicle, and the second drive motor is configured to drive or brake a right wheel of the second side wheels of the vehicle. A first side and a second side are a front side and a rear side.

In a failure case, the control apparatus is configured to:
in response to a failure of the first electric motor brake, disable the second drive motor from braking the right wheel of the second side wheels, and control the first drive motor to brake the left wheel of the second side wheels and the second electric motor brake to brake the right wheel of the first side wheels; or disable the second electric motor brake from braking the right wheel of the first side wheels, and control the first drive motor and the second drive motor to brake the left wheel and the right wheel of the second side wheels respectively; and
in response to a failure of the second electric motor brake, disable the first drive motor from braking the left wheel of the second side wheels, and control the second drive motor to brake the right wheel of the second side wheels and the first electric motor brake to brake the left wheel of the first side wheels; or disable the first electric motor brake from braking the left wheel of the first side wheels, and control the first drive motor and the second drive motor to brake the left wheel and the right wheel of the second side wheels respectively.

In some embodiments of this application, when a failure occurs, the control apparatus may be further configured to:
in response to a failure of any one of the first electric motor brake, the second electric motor brake, the first drive motor, and the second drive motor, provide a correction angle signal for a steering system, so that the steering system compensates for a steering angle.

In some embodiments of this application, when brake force requirements are different, the control apparatus may be configured to:
in response to that a brake force requirement indicated by a brake signal is greater than a second threshold, control the first electric motor brake and the second electric motor brake to brake the left wheel and the right wheel of the first side wheels, and control the drive system to brake the left wheel and the right wheel of the second side wheels.

In some embodiments of this application, when brake force requirements are different, the control apparatus may be configured to:
in response to that a brake force requirement indicated by a brake signal is greater than a second threshold and less than a third threshold, control the first electric motor brake and the second electric motor brake to brake the left wheel and the right wheel of the first side wheels, and control the drive system to brake the left wheel and the right wheel of the second side wheels by using the energy regeneration function; and in response to that a brake force requirement indicated by a brake signal is greater than the third threshold, control the first electric motor brake and the second electric motor brake to brake the left wheel and the right wheel of the first side wheels, and control the drive system to reversely brake the left wheel and the right wheel of the second side wheels.

This application further provides an integrated driving and braking control method for a vehicle. The vehicle includes a first electric motor brake, a second electric motor brake, and a drive system with an energy regeneration function, and the drive system includes a first drive motor and a second drive motor.

In a failure case, the control method includes: in response to a failure of the first electric motor brake, disabling the second drive motor from braking the right wheel of the second side wheels, and controlling the first drive motor to brake the left wheel of the second side wheels and the second electric motor brake to brake the right wheel of the first side wheels; or disabling the second electric motor brake from braking the right wheel of the first side wheels, and controlling the first drive motor and the second drive motor to brake the left wheel and the right wheel of the second side wheels respectively; and
in response to a failure of the second electric motor brake, disabling the first drive motor from braking the left wheel of the second side wheels, and controlling the second drive motor to brake the right wheel of the second side wheels and the first electric motor brake to brake the left wheel of the first side wheels; or disabling the first electric motor brake from braking the left wheel of the first side wheels, and controlling the first drive motor and the second drive motor to brake the left wheel and the right wheel of the second side wheels respectively, where a first side and a second side are a front side and a rear side.

In some embodiments of this application, in a failure case, the control method includes: in response to a failure of any one of the first electric motor brake, the second electric motor brake, the first drive motor, and the second drive motor, providing a correction angle signal for a steering system, so that the steering system compensates for a steering angle.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A vehicle, wherein the vehicle comprises a first electric motor brake, a second electric motor brake, a drive system with an energy regeneration function, and a control apparatus;
the first electric motor brake and the second electric motor brake are disposed on a first side of the vehicle, and the control apparatus is configured to control a left wheel of first side wheels of the vehicle to be braked by only the first electric motor brake and a right wheel of the first side wheels of the vehicle to be braked by only the second electric motor brake; and
the drive system is disposed on a second side of the vehicle, and the control apparatus is configured to control a left wheel and a right wheel of second side wheels of the vehicle to be braked by only the drive system, wherein the first side and the second side are a front side and a rear side.

2. The vehicle according to claim 1, wherein the control apparatus is configured to:
in response to a failure of the first electric motor brake, disable the second electric motor brake from braking the right wheel of the first side wheels, and control the drive system to brake the left wheel and the right wheel of the second side wheels; and
in response to a failure of the second electric motor brake, disable the first electric motor brake from braking the left wheel of the first side wheels, and control the drive system to brake the left wheel and the right wheel of the second side wheels.

3. The vehicle according to claim 1 or 2, wherein the drive system comprises a first drive motor and a second drive motor;
the first drive motor is configured to drive or brake the left wheel of the second side wheels of the vehicle;
the second drive motor is configured to drive or brake the right wheel of the second side wheels of the vehicle; and
the control apparatus is configured to:
in response to a failure of the first electric motor brake, disable the second drive motor from braking the right wheel of the second side wheels, and control the first drive motor to brake the left wheel of the second side wheels and the second electric motor brake to brake the right wheel of the first side wheels; or disable the second electric motor brake from braking the right wheel of the first side wheels, and control the first drive motor and the second drive motor to brake the left wheel and the right wheel of the second side wheels respectively; and
in response to a failure of the second electric motor brake, disable the first drive motor from braking the left wheel of the second side wheels, and control the second drive motor to brake the right wheel of the second side wheels and the first electric motor brake to brake the left wheel of the first side wheels; or disable the first electric motor brake from braking the left wheel of the first side wheels, and control the first drive motor and the second drive motor to brake the left wheel and the right wheel of the second side wheels respectively.

4. The vehicle according to claim 3, wherein the control apparatus is configured to:
in response to a failure of the first drive motor, disable the second drive motor from braking the right wheel of the second side wheels, and control the first electric motor brake and the second electric motor brake to brake the left wheel and the right wheel of the first side wheels respectively; and
in response to a failure of the second drive motor, disable the first drive motor from braking the left wheel of the second side wheels, and control the first electric motor brake and the second electric motor brake to brake the left wheel and the right wheel of the first side wheels respectively.

5. The vehicle according to any one of claims 1 to 4, wherein the control apparatus is configured to:
in response to a failure of any one of the first electric motor brake, the second electric motor brake, and the drive system, the control apparatus provides a correction angle signal for a steering system, so that the steering system compensates for a steering angle.

6. The vehicle according to any one of claims 1 to 5, wherein the control apparatus is configured to:
in response to that a brake force requirement indicated by a brake signal is less than a first threshold, control the drive system to brake the left wheel and the right wheel of the second side wheels.

7. The vehicle according to any one of claims 1 to 5, wherein the control apparatus is configured to:
in response to that a brake force requirement indicated by a brake signal is greater than a first threshold and less than a second threshold, control the first electric motor brake and the second electric motor brake to brake the left wheel and the right wheel of the first side wheels.

8. The vehicle according to any one of claims 1 to 5, wherein the control apparatus is configured to:
in response to that a brake force requirement indicated by a brake signal is greater than a second threshold, control the first electric motor brake and the second electric motor brake to brake the left wheel and the right wheel of the first side wheels, and control the drive system to brake the left wheel and the right wheel of the second side wheels.

9. The vehicle according to any one of claims 1 to 5, wherein the control apparatus is configured to:
in response to that a brake force requirement indicated by a brake signal is greater than a second threshold and less than a third threshold, control the first electric motor brake and the second electric motor brake to brake the left wheel and the right wheel of the first side wheels, and control the drive system to brake the left wheel and the right wheel of the second side wheels by using the energy regeneration function; and
in response to that a brake force requirement indicated by a brake signal is greater than the third threshold, control the first electric motor brake and the second electric motor brake to brake the left wheel and the right wheel of the first side wheels, and control the drive system to reversely brake the left wheel and the right wheel of the second side wheels.

10. An integrated driving and braking control apparatus for a vehicle, wherein the vehicle comprises a first electric motor brake, a second electric motor brake, and a drive system with an energy regeneration function;
the first electric motor brake is configured to brake a left wheel of first side wheels of the vehicle;
the second electric motor brake is configured to brake a right wheel of the first side wheels of the vehicle;
the drive system comprises a first drive motor and a second drive motor, the first drive motor is configured to drive or brake a left wheel of second side wheels of the vehicle, the second drive motor is configured to drive or brake a right wheel of the second side wheels of the vehicle, and a first side and a second side are a front side and a rear side; and
the control apparatus is configured to:
in response to a failure of the first electric motor brake, disable the second drive motor from braking the right wheel of the second side wheels, and control the first drive motor to brake the left wheel of the second side wheels and the second electric motor brake to brake the right wheel of the first side wheels; or disable the second electric motor brake from braking the right wheel of the first side wheels, and control the first drive motor and the second drive motor to brake the left wheel and the right wheel of the second side wheels respectively; and
in response to a failure of the second electric motor brake, disable the first drive motor from braking the left wheel of the second side wheels, and control the second drive motor to brake the right wheel of the second side wheels and the first electric motor brake to brake the left wheel of the first side wheels; or disable the first electric motor brake from braking the left wheel of the first side wheels, and control the first drive motor and the second drive motor to brake the left wheel and the right wheel of the second side wheels respectively.

11. The integrated driving and braking control apparatus for a vehicle according to claim 10, wherein the control apparatus is configured to:
in response to a failure of any one of the first electric motor brake, the second electric motor brake, the first drive motor, and the second drive motor, provide a correction angle signal for a steering system, so that the steering system compensates for a steering angle.

12. The integrated driving and braking control apparatus for a vehicle according to claim 10 or 11, wherein the control apparatus is configured to:
in response to that a brake force requirement indicated by a brake signal is greater than a second threshold, control the first electric motor brake and the second electric motor brake to brake the left wheel and the right wheel of the first side wheels, and control the drive system to brake the left wheel and the right wheel of the second side wheels.

13. The integrated driving and braking control apparatus for a vehicle according to any one of claims 10 to 12, wherein the control apparatus is configured to:
in response to that a brake force requirement indicated by a brake signal is greater than the second threshold and less than a third threshold, control the first electric motor brake and the second electric motor brake to brake the left wheel and the right wheel of the first side wheels, and control the drive system to brake the left wheel and the right wheel of the second side wheels by using the energy regeneration function; and
in response to that a brake force requirement indicated by a brake signal is greater than the third threshold, control the first electric motor brake and the second electric motor brake to brake the left wheel and the right wheel of the first side wheels, and control the drive system to reversely brake the left wheel and the right wheel of the second side wheels.

14. An integrated driving and braking control method for a vehicle, wherein the vehicle comprises a first electric motor brake, a second electric motor brake, and a drive system with an energy regeneration function, the drive system comprises a first drive motor and a second drive motor, and the method comprises:
in response to a failure of the first electric motor brake, disabling the second drive motor from braking the right wheel of the second side wheels, and controlling the first drive motor to brake the left wheel of the second side wheels and the second electric motor brake to brake the right wheel of the first side wheels; or disabling the second electric motor brake from braking the right wheel of the first side wheels, and controlling the first drive motor and the second drive motor to brake the left wheel and the right wheel of the second side wheels respectively; and
in response to a failure of the second electric motor brake, disabling the first drive motor from braking the left wheel of the second side wheels, and controlling the second drive motor to brake the right wheel of the second side wheels and the first electric motor brake to brake the left wheel of the first side wheels; or disabling the first electric motor brake from braking the left wheel of the first side wheels, and controlling the first drive motor and the second drive motor to brake the left wheel and the right wheel of the second side wheels respectively, wherein a first side and a second side are a front side and a rear side.

15. The integrated driving and braking control method for a vehicle according to claim 14, wherein the method comprises:
in response to a failure of any one of the first electric motor brake, the second electric motor brake, the first drive motor, and the second drive motor, providing a correction angle signal for a steering system, so that the steering system compensates for a steering angle.
